# EUROPEAN PATENT SPECIFICATION

(11) **EP 1 808 595 B1**
(45) Date of publication and mention of the grant of the patent: **18.09.2013**
(21) Application number: 07000903.0
(22) Date of filing: 17.01.2007
(51) Int. Cl.: F02M 35/16, F02M 35/04, F02M 35/10, F02B 27/02

(54) **Intake system for an internal combustion engine**
Luftansaugkanalsystem für eine Verbrennungskraftmaschine
Système d'admission pour un moteur à combustion interne

(30) Priority: 20.09.2006 JP 2006253642; 17.01.2006 JP 2006009139
(43) Date of publication of application: 18.07.2007
(73) Proprietor: Yamaha Hatsudoki Kabushiki Kaisha, Shizuoka-ken Shizuoka 438-8501 (JP)
(72) Inventor: Yokoi, Masato, Iwata-shi Shizuoka-ken 438-8501 (JP)
(74) Representative: Grünecker, Kinkeldey, Stockmair & Schwanhäusser

(56) References cited:
- JP-A- 2 223 632
- JP-U- 64 027 431
- US-A- 4 890 586

## Description

The present invention relates to a vehicle and more particularly to a vehicle equipped with a funnel for introducing air to an intake port of an engine.

Intake devices are known that are equipped with a funnel for introducing air to an intake port of an engine (for example, see Patent Document 1). Patent Document 1 discloses an intake device equipped with a funnel (a fixed funnel) for introducing air that enters from a front side (an upstream side of a case) to an intake port of an engine; an extension pipe (a moveable funnel) provided in an upper section of the funnel and that is capable of being connected with/separated away from the funnel; and an intake box (case) in which the funnel and the extension pipe are housed. This intake device is normally housed inside a tank cover in which a fuel tank is disposed. In addition, in order that an inner wall surface of the intake box and the extension pipe do not come into contact, the intake box is structured such that the space of a section of the intake box, which corresponds with the position to which the extension pipe is moved when it is separated away from the funnel, is made larger.

Patent Document 1: Japanese Patent No. 2779198

However, in the structure disclosed in Patent Document 1, the intake box (case) is structured such that the space of the section of the intake box, which corresponds with the position to which the extension pipe (the moveable funnel) is moved when it is separated away from the funnel (the fixed funnel), is made larger. As a result, the intake device disposed inside the tank cover has a larger size.

The invention has been devised in light of the above-described problems and it is an object of the invention to provide a vehicle that can inhibit size increase of a case section of an intake device.

This objective is solved in an inventive manner by a vehicle comprising: an engine having an intake port; a fixed funnel that introduces air to the intake port of the engine; a moveable funnel that is moveably supported by a funnel moving mechanism on the intake side of the fixed funnel and that introduces air to the intake port of the engine along with the fixed funnel; and a case, in which the fixed funnel and the moveable funnel are disposed, wherein said case is provided with a protrusion at a section that covers the moveable funnel, the protrusion preventing the occurrence of contact between the case and the moveable funnel.

Preferably, the funnel moving mechanism comprises a link mechanism that movably supports the movable funnel.

Further, preferably the protrusion is provided at the rear section of the case so as to protrude to the outside of the case at a region that corresponds to a rear section of an upper edge section of the moveable funnel, such that the rear section of the upper edge section of the moveable funnel does not come into contact with an inner surface of the case when the moveable funnel is raised.

According to another embodiment, the vehicle further comprises: a fuel tank that is positioned so as to cover a section of the case that corresponds with the section where the moveable funnel is provided, and that is disposed to the rear of the case when the vehicle is viewed from the side, wherein a recess is provided in the section of the fuel tank that corresponds with the protrusion of the case.

Preferably, the fuel tank is disposed to the rear a distance equivalent to the length of the protrusion of the case to reduce the size of the gap between the case and the fuel tank.

Further, preferably the gap between the fuel tank and the case is formed to have a constant size.

Yet further, preferably the link mechanism functioning as the funnel moving mechanism comprises a parallel link that has a plurality of link levers that moveably support the moveable funnel such that it is capable of parallel movement.

Yet further still, preferably in the case that the engine is rotating at high speed, the link levers turn in a first direction to move an opening of the moveable funnel on the fixed funnel side to a first position at which the opening is away from an opening on the intake side of the fixed funnel, and in the case that the engine is rotating at low speed, the link levers turn in a second direction that is opposite to the first direction to move the opening of the moveable funnel on the fixed funnel side to a second position at which the opening is in contact with the opening on the intake side of the fixed funnel.

Preferably, a turning amount of the link levers is adjusted such that the position of an opening surface of the moveable funnel on the intake side of the fixed funnel in the first position is the same as the position of the opening surface of moveable funnel on the intake side of the fixed funnel in the second position when viewed from an opening direction of the fixed funnel.

Further, preferably the engine has a plurality of the intake port, the moveable funnel is provided in a plurality, with each moveable funnel corresponding to one of the intake ports, and the protrusion provided in the case is located at a position that corresponds with the positions where the moveable funnels are provided.

Yet further, preferably the engine has a plurality of the intake port, the intake ports being arranged linearly, the moveable funnel, which is supported by the parallel link, is provided in a plurality, each moveable funnel being located at a position that corresponds with the arrangement position of a respective one of the intake ports when the vehicle is viewed from above, and the protrusion is formed at a position that corresponds with the positions at which the moveable funnels are provided.

Yet further still, preferably the plurality of intake ports of the engine are arranged in a vehicle width direction.

According to yet another embodiment, the vehicle further comprises a resin cover that is disposed so as to cover a section of the fuel tank and a section of the case. Therein, the resin cover may be disposed so as to cover the gap formed between the fuel tank and the cover.

Preferably, the resin cover is disposed so as to be smoothly contiguous with a surface of a section of the fuel tank that is not covered by the resin cover.

According to still another embodiment, the vehicle further comprises a drive source that drives the link mechanism in order to move the moveable funnel, the drive source being disposed, if the moveable funnel is taken as a reference point, to the opposite side from the side where the fuel tank is disposed.

In the following, the present invention is explained in greater detail with respect to several embodiments thereof in conjunction with the accompanying drawings, wherein:
- Fig. 1: is a side view showing the overall structure of a motorcycle according to an embodiment,
- Fig. 2: is a partial cross sectional view of a periphery section of a fuel tank and a cleaner box of the motorcycle of the embodiment shown in Fig. 1,
- Fig. 3: is a side view of a periphery area of funnels of the motorcycle of the embodiment shown in Fig. 1,
- Fig. 4: is a side view of the periphery area of the funnels of the motorcycle of the embodiment shown in Fig. 1,
- Fig. 5: is a top view from the outside of the funnels and the fuel tank of the motorcycle of the embodiment shown in Fig. 1,
- Fig. 6: is a front view of a periphery area of the funnels of the motorcycle of the embodiment shown in Fig. 1,
- Fig.7: is a perspective view showing a state when moveable funnels of the motorcycle of the embodiment shown in Fig. 1 have been moved to a separation position,
- Fig. 8: is a side view showing a state when the moveable funnels of the motorcycle of the embodiment shown in Fig. 1 have been moved to the separation position,
- Fig. 9: is a perspective view showing a state when the moveable funnels of the motorcycle of the embodiment shown in Fig. 1 have been moved to a contacting position,
- Fig. 10: is a side view showing a state when the moveable funnels of the motorcycle of the embodiment shown in Fig. 1 have been moved to the contacting position,
- Fig. 11: is a plan view that illustrates the detailed structure of the periphery area of the funnels of the motorcycle of the embodiment shown in Fig. 1,
- Fig 12: is a perspective view of fixed funnels of the motorcycle of the embodiment shown in Fig. 1,
- Fig. 13: is a front view of the fixed funnels of the motorcycle of the embodiment shown in Fig. 1,
- Fig. 14: is a cross sectional view that illustrates the structure of screw insertion holes of the fixed funnels shown in Fig. 12 and Fig. 13,

- Fig. 15: is a front view of the moveable funnels of the motorcycle of the embodiment shown in Fig. 1,
- Fig. 16: is a front view of a funnel moving mechanism of the motorcycle of the embodiment shown in Fig. 1,
- Fig. 17: is a cross sectional view that illustrates the structure of a moving member of the funnel moving mechanism shown in Fig. 16,
- Fig. 18: is a front view of the funnel moving mechanism of the motorcycle of the embodiment shown in Fig. 1, and
- Fig. 19: is a cross sectional view that illustrates the structure of the moving member of the funnel moving mechanism shown in Fig. 18.

### Description of the Reference Numerals and Signs:

- 12: Fuel tank
- 12a: Recess
- 14: Engine
- 17a: Intake port
- 25: Cleaner box (Case)
- 25a: Cover
- 25b: Protrusion
- 27: Fixed funnel
- 27a: Opening
- 28: Moveable funnel
- 28a: Opening
- 42: Parallel link (Link mechanism)
- 43: Upper side link lever (Link lever, Link mechanism)
- 44: Lower side link lever (Link lever, Link mechanism)
- 45: Motor (Drive Source)
- 60: Gap

Fig. 7
   Moveable funnel separation position
Fig. 8
   Moveable funnel separation position
Fig. 9
   Moveable funnel contacting position
Fig. 10
   Moveable funnel contacting position

Hereinafter embodiments will be explained with reference to the drawings.

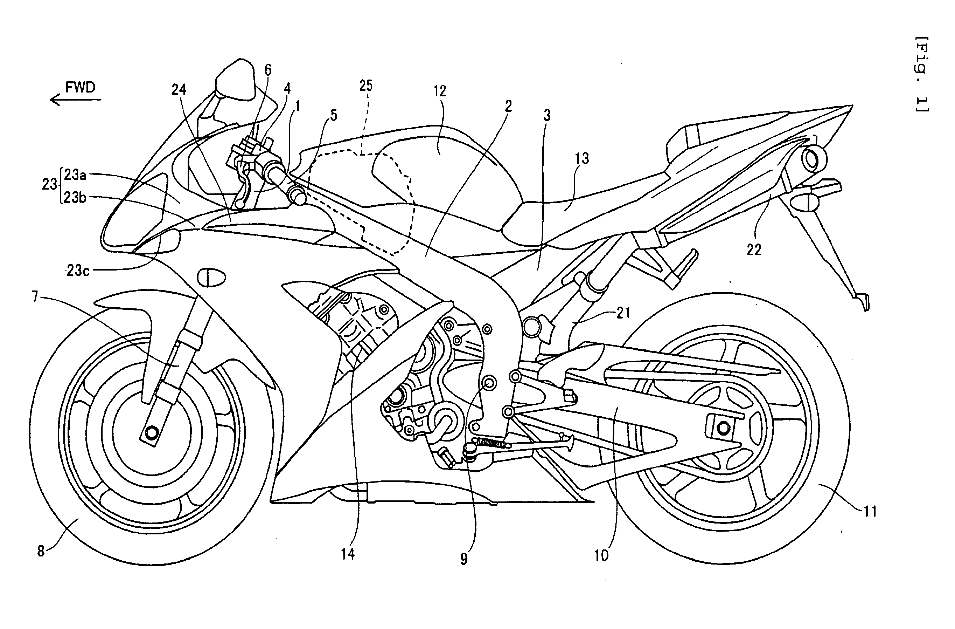

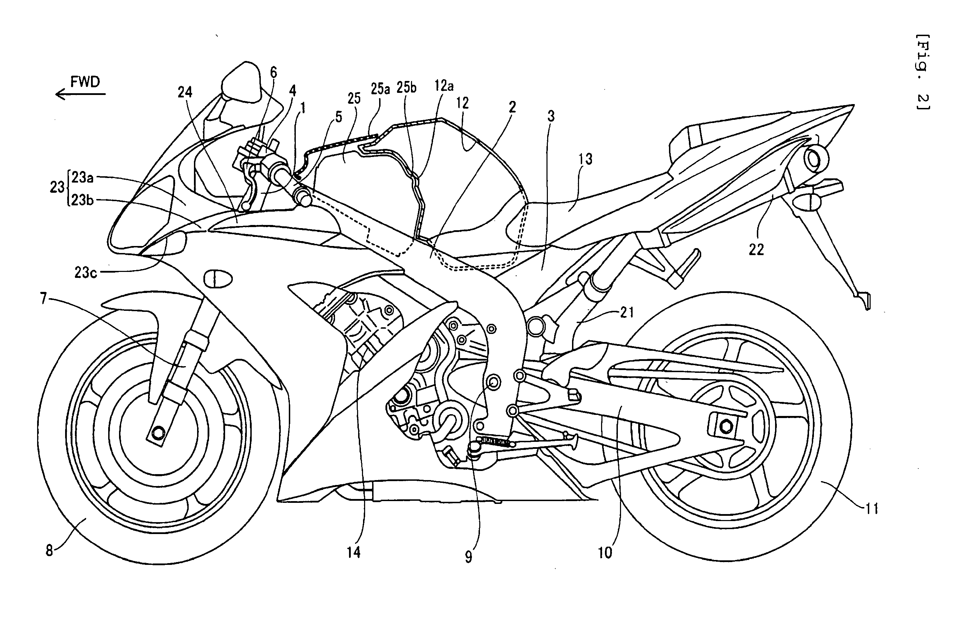

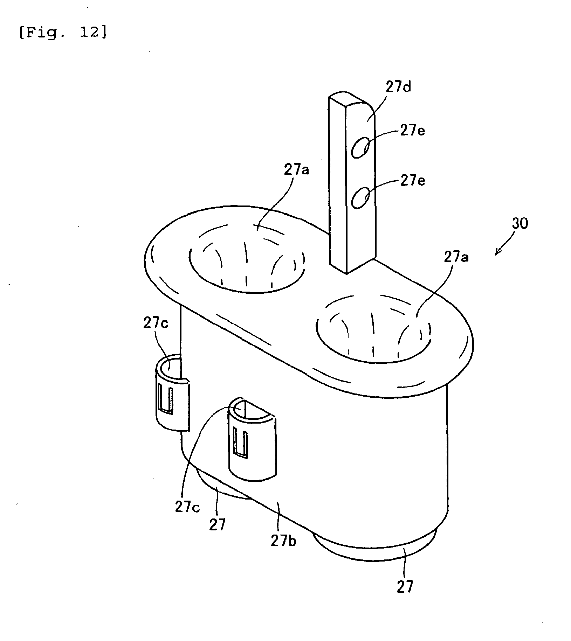

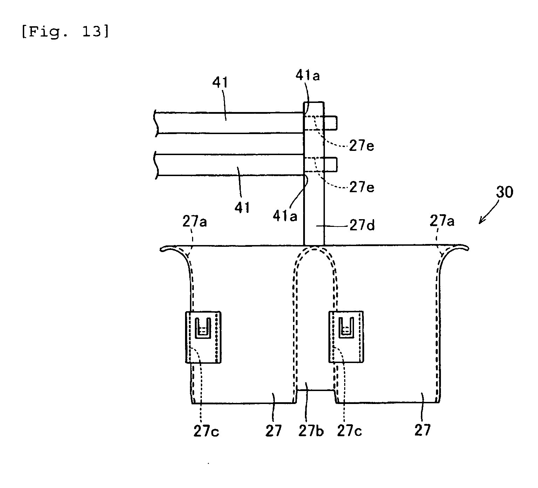

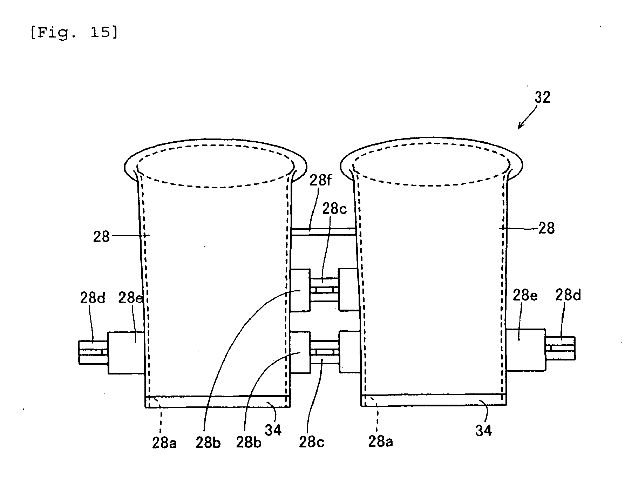

Fig. 1 is a side view of an overall structure of a motorcycle according to an embodiment. Fig. 2 to Fig. 19 are figures that illustrate in more detail the structure of funnels of the motorcycle according to the embodiment shown in Fig. 1. Note that, the embodiment explains about a motorcycle that is one example of a vehicle of the present teaching. In the figures, the arrow FWD indicates a forward direction of the motorcycle in the direction that it runs. First, the structure of the motorcycle according to the embodiment will be explained with reference to Fig. 1 to Fig. 19.

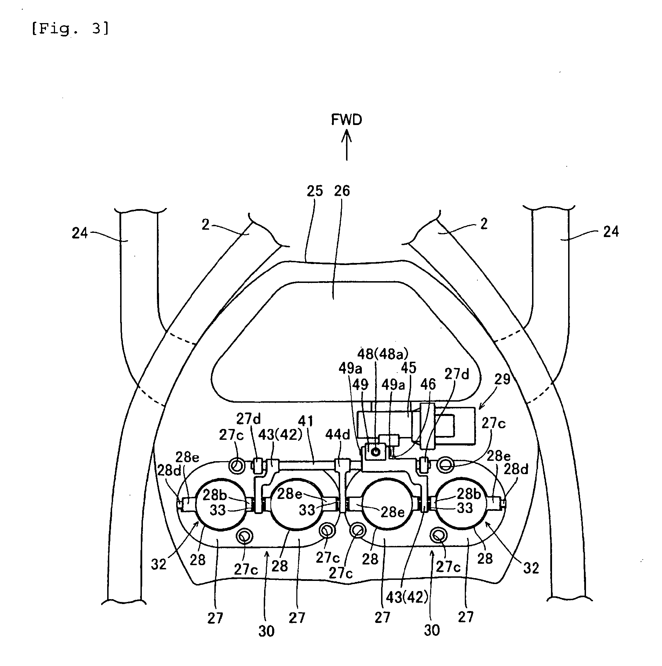

In the structure of the motorcycle according to the embodiment, as shown by Fig. 1 and Fig. 2, a front end section of a main frame 2 is connected to a head pipe 1. The main frame 2, as can be seen from Fig. 3, is disposed such that it splits and extends to the left and right with respect to the forward direction of a vehicle body. In addition, as can be seen from Fig. 1 and Fig. 2, the main frame 2 is formed to extend downwards to the rear side. Further, a seat rail 3 that extends upward to the rear side is connected to the main frame 2. In addition, a steering mechanism 4 is turnably attached to the head pipe 1. A handle 5 is attached to the upward side of the steering mechanism 4, and a clutch lever 6 is attached to the handle 5. Further, a front fork 7 is attached to a downward side of the steering mechanism 4, and a front wheel 8 is rotatably mounted to a lower end section of the front fork 7.

In addition, a front end section of a swing arm 10 is attached via a pivot bearing 9 to a rear end section of the main frame 2. A rear wheel 11 is rotatably mounted to a rear end section of the swing arm 10. Further, a cleaner box 25 and a fuel tank 12 that is to the rear of the cleaner box 25, described hereinafter, are disposed to the upward side of the main frame 2. In addition, a seat 13 is disposed to the upward side of the seat rail 3, and an engine 14 is mounted at the downward side of the main frame 2.

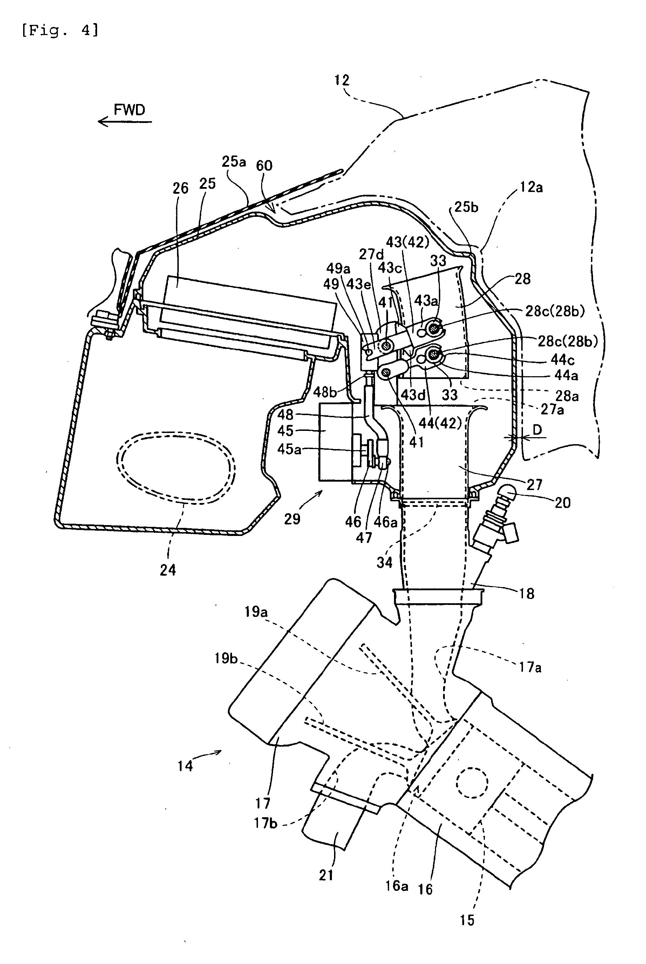

The engine 14, as shown in Fig. 4, includes a piston 15, a cylinder 16, a cylinder head 17, and a throttle body 18. The piston 15 is fitted inside the cylinder 16 and the cylinder head 17 is disposed so as to block the opening at one end of the cylinder 16. Further, an intake port 17a and an intake port 17b are formed in the cylinder head 17. The intake port 17a is provided to supply an air-fuel mixture including air and fuel to a combustion chamber 16a of the cylinder 16. Further, the intake port 17b is provided to exhaust residual gas remaining after combustion from the combustion chamber 16a of the cylinder 16. Moreover, an intake value 19a and an intake value 19b are respectively provided in the intake port 17a and the intake port 17b. The throttle body 18 is attached to an opening of the intake port 17a. Further, an injector 20 is attached to the throttle body 18 in order to inject fuel to the intake port 17a. In addition, an exhaust pipe 21 is attached to an opening of the intake port 17b. This exhaust pipe 21 is connected to a muffler 22 (refer to Fig. 1 and Fig. 2). Note that, although only one cylinder 16 is shown in Fig. 4, in reality four cylinders 16 are linearly disposed at predetermined distances apart in the width direction of the vehicle. In other words, the engine 14 of the embodiment is an in-line 4-cylinder engine.

Further, as can be seen in Fig. 1 and Fig. 2, a front cowl 23 that includes an upper cowl 23a and a lower cowl 23b is provided so as to cover a front side of the vehicle body. Intake holes 23c are provided in a front side of the lower cowl 23b. Note that, Fig. 1 and Fig. 2 only show, with respect to the forward direction of the vehicle body, the left side intake hole 23c. However, in reality a pair of the intake holes 23c is provided in a left-right symmetrical manner with respect to the forward direction of the vehicle body. Further, air ducts 24 are connected to the intake holes 23c of the lower cowl 23b. In addition, as shown in Fig. 1 to Fig. 3, the cleaner box 25, which is supplied with air form the air ducts 24, is disposed between the main frame 2 that branches to the left and right.

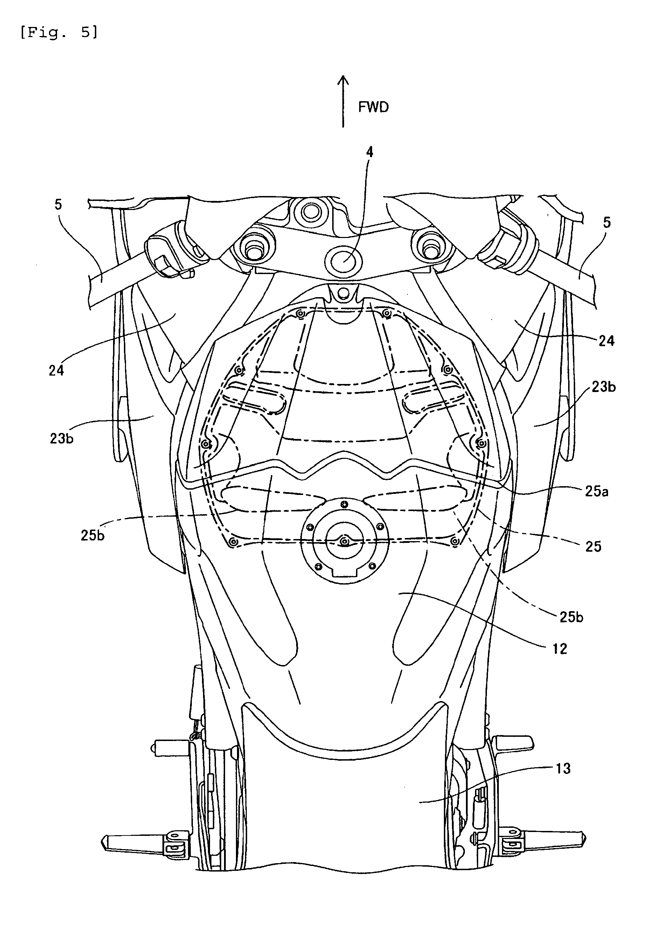

Note that, in this embodiment, as shown in Fig. 4, a rear section and a rear section upper surface of the cleaner box 25 are covered by the fuel tank 12. Further, a cover 25a made of resin is positioned so as to cover an upper surface of a front section of the cleaner box 25 and a front section of the fuel tank 12. Moreover, the resin cover 25a also covers a gap 60 between the fuel tank 12 and the cleaner box 25. In addition, as shown in Fig. 4 and Fig. 5, a section of the fuel tank 12 that is not covered by the resin cover 25a and the resin cover 25a are disposed so as to be smoothly contiguous with each other. As a result, when the motorcycle is running, air that flows from the front can smoothly pass to the rear, thereby reducing air resistance when the motorcycle is running. Note that, the cleaner box 25 is one example of a "case" of the present teaching.

In addition, in the embodiment, a protrusion 25b is provided at the rear section of the cleaner box 25 that protrudes to the outside of the cleaner box 25. The protrusion 25b, as can be seen in Fig. 4, is provided so as to protrude to the outside at a region that corresponds to a rear section of an upper edge section of a moveable funnel 28, described hereinafter, such that the rear section of the upper edge section of the moveable funnel 28 does not come into contact with an inner surface of the cleaner box 25 when the moveable funnel 28 is raised. As a result, as compared to when the entire rear section of the cleaner box 25 is made larger, it is possible to inhibit size increase of the cleaner box 25. Further, a recess 12a is provided in a section of the fuel tank 12 that corresponds to the protrusion 25b. As a result, as compared to the case when the recess 12a is not provided in the fuel tank 12, and the fuel tank 12 is disposed to the rear a distance equivalent to the length of the protrusion 25b of the cleaner box 25, it is possible to reduce the size of the gap between the cleaner box 25 and the sections of the fuel tank 12 other than the section that corresponds to the protrusions 25b. More specifically, when the recess 12a is provided in the section of the fuel tank 12 that corresponds to the protrusion 25b of the cleaner box 25, to the extent that the gap between the cleaner box 25 and the sections of the fuel tank 12 other than the section corresponding to the protrusion 25b is reduced in the size, the area can be used as space for disposing the fuel tank 12. Further, the cleaner box 25 and the fuel tank 12 are positioned such that across the entire region in which the cleaner box 25 and the fuel tank 12 face each other, the gap 60 between the cleaner box 25 and the fuel tank 12 has a constant distance D (roughly 10 mm) that is the minimal necessary. As a result, the structure allows the cleaner box 25 and the fuel tank 12 to be positioned such that they do not come into contact with each other, and the volume of the fuel tank 12 to be increased still further. Note that, the distance D is just one example of a "constant size" of the present teaching. In addition, the protrusion 25b of the cleaner box 25, as shown in Fig. 5, is provided at two locations on the left and right sides of the upper surface of the cleaner box 25. Further, as can be seen in Fig. 3 and Fig. 4, an air filter 26 for purifying the air supplied from the air ducts 24 is provided inside the cleaner box 25.

Moreover, as shown in Fig. 3, Fig. 4 and Fig. 6, fixed funnels 27, moveable funnels 28, and a funnel moving mechanism 29 are provided inside the cleaner box 25. One each of the fixed funnel 27 and the moveable funnel 28 are provided for each cylinder 16 of the engine 14. Note that, each one of the protrusions 25b provided at two locations in the cleaner box 25 are formed such that contact with the moveable funnels 28 of two cylinders is prevented. Further, four of the moveable funnels 28 are linearly positioned at positions that correspond with the arrangement positions of the intake ports 17a when the motorcycle is viewed from the top side thereof, and the two protrusions 25b are formed linearly in alignment with the moveable funnels 28. Further, the fixed funnels 27 are fixed with respect to the cleaner box 25 and function to introduce purified air inside the cleaner box 25 to the intake ports 17a. In addition, the moveable funnels 28 are disposed on the intake side (the upstream side) of the fixed funnels 27, and function along with the fixed funnels 27 to introduce purified air inside the cleaner box 25 to the intake ports 17a.

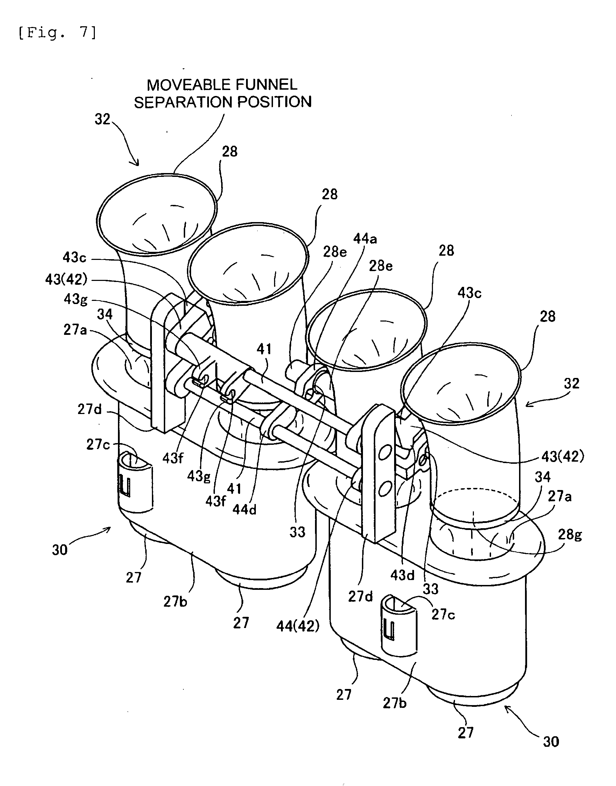

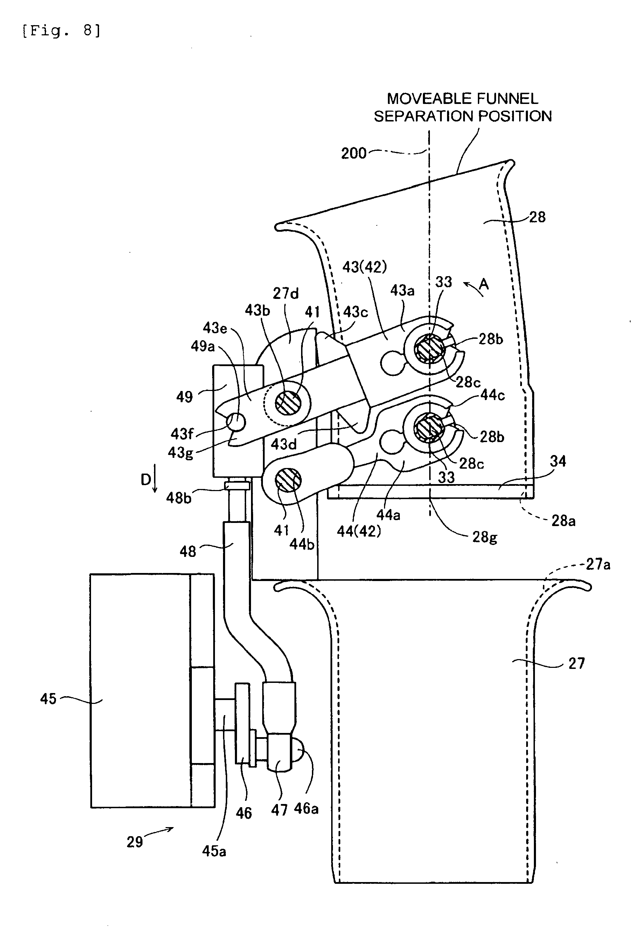

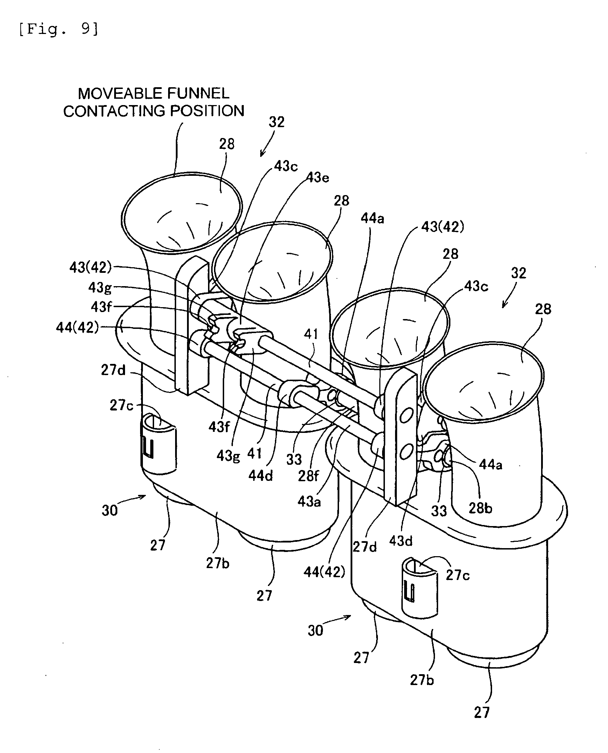

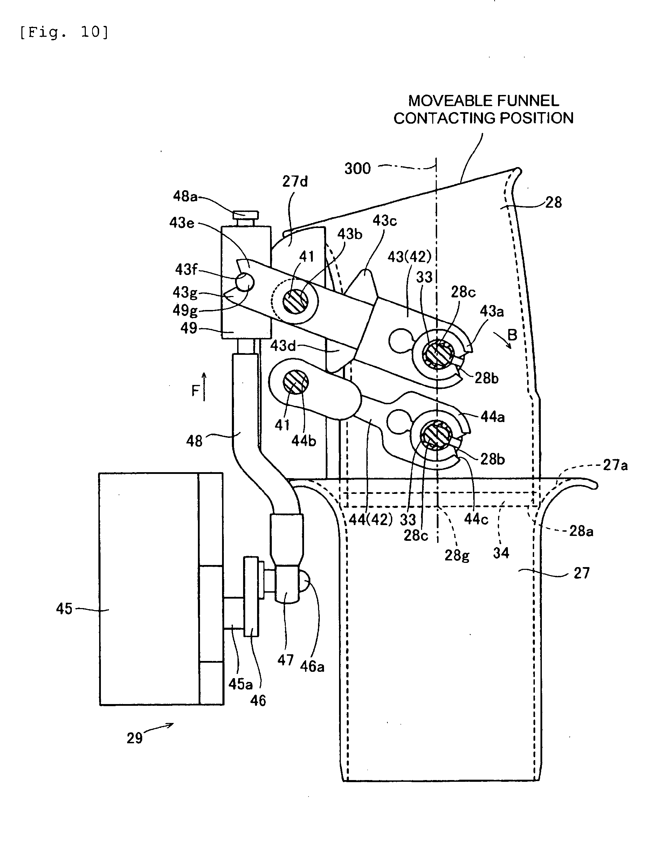

In addition, as shown in Fig. 7 to Fig. 10, each moveable funnel 28 is structured so as to be moveable between a separation position and a contacting position. The separation position (the state shown in Fig. 7 and Fig. 8) is a position at which an opening 28a of the moveable funnel 28 on the fixed funnel 27 side is separated away from an opening 27a on the intake side of the fixed funnel 27. The contacting position (the state shown in Fig. 9 and Fig. 10) is a position at which the opening 28a of the moveable funnel 28 is placed in contact with the opening 27a of the fixed funnel 27. Note that, as shown in Fig. 4, when the moveable funnel 28 is moved to the separation position (the state shown in Fig. 7 and Fig. 8), the intake pipe that connects from the cleaner box 25 to the cylinder 16 is structured by the fixed funnel 27, the throttle body 18, and the intake port 17a. On the other hand, when the moveable funnel 28 is moved to the contacting position (the state shown in Fig. 9 and Fig. 10), the intake pipe that connects from the cleaner box 25 to the cylinder 16 is structured by the moveable funnel 28, the fixed funnel 27, the throttle body 18 and the intake port 17a. Further, the funnel moving mechanism 29 functions to move the moveable funnels 28 between the separation position and the contacting position. Note that, the separation position and the contacting position are just examples of a "first position" and a "second position" of the present teaching.

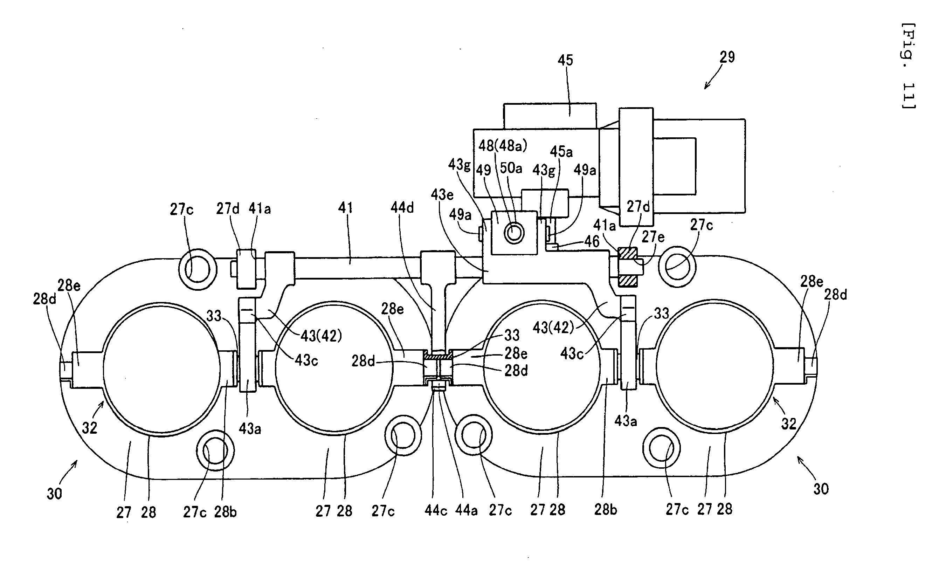

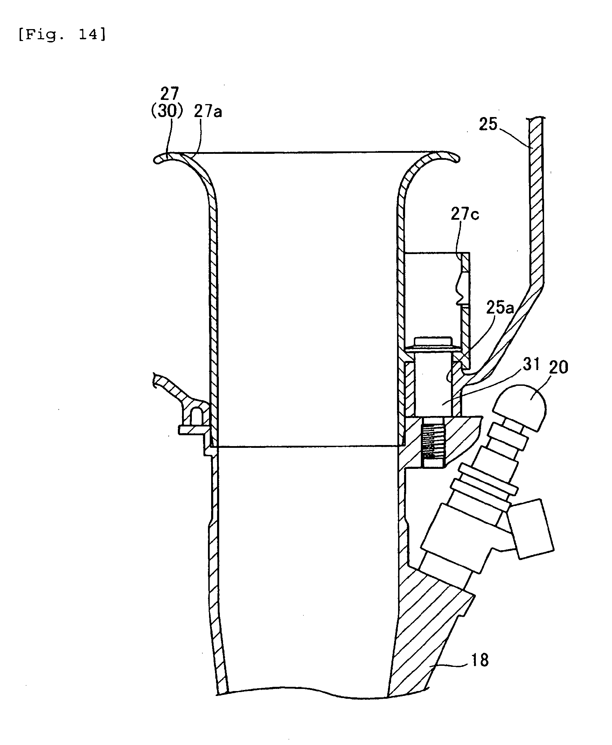

Note that, as can be seen from Fig. 11 to Fig. 13, the fixed funnels 27 are structured such that neighboring pairs of the fixed funnels 27 are integrally formed via a connecting section 27b. More specifically, the embodiment includes two of a component 30 in which neighboring pairs of fixed funnels 27 are integrated. Further, three screw insertion holes 27c are respectively formed in each component 30 that integrates the pair of fixed funnels 27. Screws 31 (refer to Fig. 14) are inserted in the screw insertion holes 27c. In addition, as shown in Fig. 14, each fixed funnel 27 (the component 30) is attached to both the cleaner box 25 and the throttle body 18 by screwing the screws 31 into the screw insertion holes 27c. Note that, screw insertion holes 25a into which the screws 31 are inserted are provided in the cleaner box 25.

Further, as shown in Fig. 11 to Fig. 13, a strut 27d is integrally provided with the component 30 that integrates the pair of fixed funnels 27. A pair of turning shaft support holes 27e that rotatably support an end section of turning shafts 41, described hereinafter, is formed in the strut 27d.

In addition, as shown in Fig. 11 to Fig. 15, the moveable funnels 28 have a structure in which neighboring pairs of moveable funnels 28 are formed integrally via a pair of support shafts 28b. In other words, the embodiment includes a pair of components 32 in which neighboring pairs of moveable funnels 28 are integrated. Further, the support shafts 28b are positioned between the pair of moveable funnels 28 of each component 32. Note that, as a result of the support shaft 28 being supported by parallel links 42, described hereinafter, the moveable funnels 28 (the component 32) are held in a moveable manner. Further, thin diameter sections 28c are formed in the support shafts 28b.

In addition, support shafts 28e having thin diameter sections 28d are provided at the outer side surface of the component 32 that integrates the neighboring pairs of moveable funnels 28. Further, a strengthening rib 28f is provided between the pair of moveable funnels 28 of the component 32. Moreover, as shown in Fig. 11, two of the component 32 that integrates the pair of moveable funnels 28 are positioned such that the end surfaces of the respective thin diameter sections 28d of the support shafts 28e face each other.

Further, referring to Fig. 11, a split bush 33 is mounted on each thin diameter section 28c of the support shaft 28b of the moveable funnels 28 (the component 32). This split bush 33 functions to allow turning of the parallel link 42 with respect to the support shaft 28b, described hereinafter. In addition, the split bush 33 is also mounted on the thin diameter sections 28d of the support shafts 28e positioned between the components 32 that integrate the pairs of moveable funnels 28. Note that, only one of the split bush 33 is positioned between the components 32 that integrate the pairs of moveable funnels 28. This split bush 33 is mounted so as to straddle between the thin diameter sections 28d of the pair of support shafts 28e.

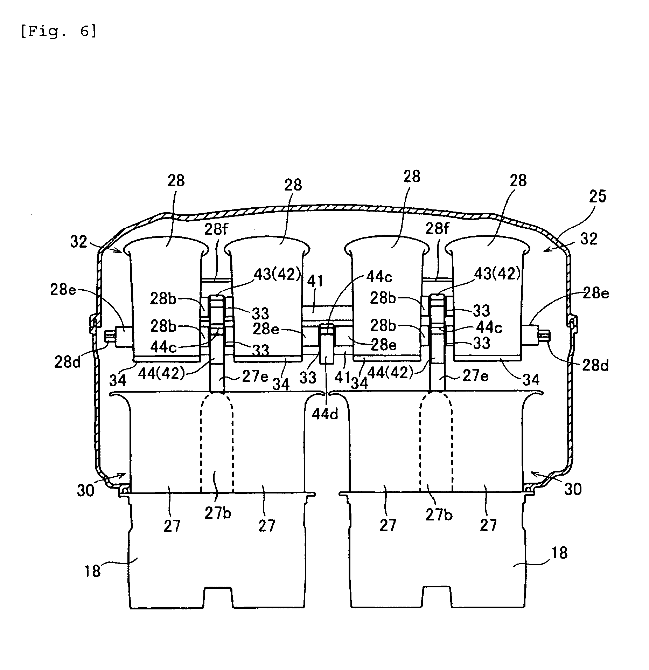

Further, referring to Fig. 6 to Fig. 8, a rubber lip 34 is mounted on the end section of each moveable funnel 28 on the fixed funnel 27 side. This rubber lip 34 functions to seal the gap between the moveable funnel 28 and the fixed funnel 27 when the moveable funnel 28 is moved to the contacting position (the state shown in Fig. 10).

Moreover, in the embodiment, as shown in Fig. 8 to Fig. 10, the funnel moving mechanism 29 uses the parallel link 42 to move the moveable funnel 28 between the separation position (the state shown in Fig. 7 and Fig. 8) and the contacting position (the state shown in Fig. 9 and Fig. 10).

As can be seen from Fig. 11 to Fig. 13, the funnel moving mechanism 29 has a concrete structure in which the end sections of the turning shafts 41 are rotatably supported in the turning shaft support holes 27e of the strut 27d provided on the fixed funnel 27 (the component 30). Further, stepped sections 41 a are provided in one end section and another end section of each turning shaft 41, and these stepped sections 41a abut with respective opening end sections of the turning shaft support holes 27e of the strut 27d. As a result, movement in the axial direction of the turning shafts 41 is controlled.

Further, in the embodiment, as can be seen in Fig. 11, the parallel links 42 are attached respectively to the one end section and the other end section sides of the turning shafts 41 so as to turn along with the turning shafts 41. Note that, the parallel links 42 are just one example of a "link mechanism" present teaching. The parallel links 42, as can be seen from Fig. 7 to Fig. 10, include an upper side link lever 43 attached to the turning shaft 41 at the upper side, and a lower side link lever 44 attached to the turning shaft 41 at the lower side. Note that, the upper side link lever 43 and the lower side link lever 44 are just examples of a "link lever" of the present teaching.

The upper side link lever 43, as shown in Fig. 8, has a fitting section 43a, a turning shaft insertion hole 43b, and a pair of stoppers 43c and 43d. As can be seen from Fig. 7 to Fig. 10, the support shaft 28b (the thin diameter section 28c) of the upper side of the moveable funnel 28 is fitted via the split bush 33 in the fitting section 43a of the upper side link lever 43. As a result, the upper side link lever 43 is turnable with respect to the upper side support shaft 28b. Further, as shown in Fig. 7 to Fig. 10, the upper side turning shaft 41 is fixed to the turning shaft insertion hole 43b of the upper side link lever 43 such that the upper side link lever 43 turns along with the upper side turning shaft 41. In addition, as shown in Fig. 8, the stopper 43c of the upper side link lever 43 functions to control turning of the upper side link lever 43 in direction A by abutting with the strut 27d of the fixed funnel 27 when the upper side link lever 43 has turned a determined amount in direction A. Further, as shown in Fig. 10, the stopper 43d of the upper side link lever 43 functions to control turning in direction B of the upper side link lever 43 by abutting with the strut 27d of the fixed funnel 27 when the upper side link lever 43 has turned a determined amount in direction B. Note that, the arrow showing direction A is just one example of a "first direction" of the present teaching and the arrow showing direction B is just one example of a "second direction" of the present teaching.

In addition, referring to Fig. 10 and Fig. 11, a support section 43e that is supported by a moving member 49, described hereinafter, is provided in the upper side link lever 43 that provides one of the supports for the moveable funnels 28 (the component 32). The support section 43e is structured by a pair of retaining tabs 43g in which respective notches 43f are formed, and is positioned at the opposite side to the fitting section 43a. Note that, the support section 43e, described above, is not provided in the lower side link lever 44 that provides the other support for the moveable funnels 28 (the component 32).

In addition, the lower side link lever 44, as can be seen from Fig. 8 to Fig. 10, has a fitting section 44a and a turning shaft insertion hole 44b. The lower side support shaft 28b (the thin diameter section 28c) of the moveable funnel 28 is fitted to the fitting section 44a of the lower side link lever 44 via the split bush 33. As a result, the lower side link lever 44 is turnable with respect to the lower side support shaft 28b. Further, the lower side turning shaft 41 is fixed in the turning shaft insertion hole 44b of the lower side link lever 44 such that the lower side link lever 44 turns along with the lower side turning shaft 41. Note that, as shown in Fig. 11, a link lever 44d having a fitting section 44a, and a turning shaft insertion hole 44b like the lower side link lever 44, and a split section 44c is positioned between the components 32 that integrate the pairs of moveable funnels 28.

As a result of giving the parallel links 42 the structure described above, as can be seen in Fig. 8, when the parallel links 42 turn in direction A, each moveable funnel 28 moves in the direction away from the fixed funnel 27. Further, as shown in Fig. 10, when the parallel links 42 turn in direction B, each moveable funnel 28 moves in the direction toward the fixed funnel 27. Note that, as shown in Fig. 8 and Fig. 10, the turning amount of the parallel links 42 is adjusted such that the position of an opening surface 28g (refer to Fig. 7, Fig. 8 and Fig. 10) of the moveable funnel 28 on the side of the opening 27a of the fixed funnel 27 in the separation position (the state of Fig. 8), and the position of the opening surface 28g (refer to Fig. 7, Fig. 8 and Fig. 10) of the moveable funnel 28 on the side of the opening 27a of the fixed funnel 27 in the contacting position (the state of Fig. 10) are the same when viewed from the opening direction of the fixed funnel 27. More specifically, as can be seen from Fig. 8 and Fig. 10, adjustment is performed such that a central axis 200 of the opening surface 28g of the moveable funnel 28 in the separation position (the state shown in Fig. 8) and a central axis 300 of the opening surface 28g of the moveable funnel 28 in the contacting position (the state shown in Fig. 10) are aligned. In addition, the turning amount of the parallel links 42 is adjusted such that the position of the upper side support shaft 28b in the separation position (the state shown in Fig. 8) when viewed from the opening direction of the fixed funnel 27, and the position of the upper side support shaft 28b in the contacting position (the state shown in Fig. 10) when viewed from the opening direction of the fixed funnel 27 are the same. Further, the turning amount of the parallel links 42 is adjusted such that the position of the lower side support shaft 28b in the separation position (the state shown in Fig. 8) when viewed from the opening direction of the fixed funnel 27, and the position of the lower side support shaft 28b in the contacting position (the state shown in Fig. 10) when viewed from the opening direction of the fixed funnel 27 are the same. In addition, the turning amount of the parallel links 42 is adjusted such that the position of the upper side support shaft 28b in the separation position (the state shown in Fig. 8) when viewed from the opening direction of the fixed funnel 27, and the position of the lower side support shaft 28b in the separation position (the state shown in Fig. 8) when viewed from the opening direction of the fixed funnel 27 are the same. Further, the turning amount of the parallel links 42 is adjusted such that the position of the upper side support shaft 28b in the contacting position (the state shown in Fig. 10) when viewed from the opening direction of the fixed funnel 27, and the position of the lower side support shaft 28b in the contacting position (the state shown in Fig. 10) when viewed from the opening direction of the fixed funnel 27 are the same.

Moreover, as shown in Fig. 8, the stopper 43c of the parallel link 42 (the upper side link lever 43) is adjusted so as to abut with the strut 27d when the moveable funnel 28 reaches the separation position. Further, as shown in Fig. 10, the stopper 43d of the parallel link 42 (the upper side link lever 43) is adjusted so as to abut with the strut 27d when the moveable funnel 28 reaches the contacting position.

In addition, in the embodiment, as shown in Fig. 8 and Fig. 11, each parallel link 42 including the upper side link lever 43 and the lower side link lever 44 is caused to turn by driving force of a motor 45. More concretely, an output shaft 45a of the motor 45 is attached to one end section of a turning lever 46. Note that, the motor 45 is just one example of a "drive source" of the present teaching. Further, as can be seen in Fig. 4, the motor 45 is located at a position that is between an upstream section of the flow of air from the air filter 26 disposed inside the cleaner box 25, and a downstream section of the flow of air from the air filter 26. Further, the motor 45 is provided at the outer side of the cleaner box 25. More specifically, the cleaner box 25 is provided with a U-shape, and provided with an upstream section to the upstream of the air filter 26 and a downstream section to the downstream of the air filter 26 that face each other. Further, the motor 45 is positioned between the upstream section to the upstream of the air filter 26 and the downstream section to the downstream of the air filter 26 that face each other. In addition, the motor 45 is positioned, with respect to the moveable funnel 28, on the opposite side from the fuel tank 12.

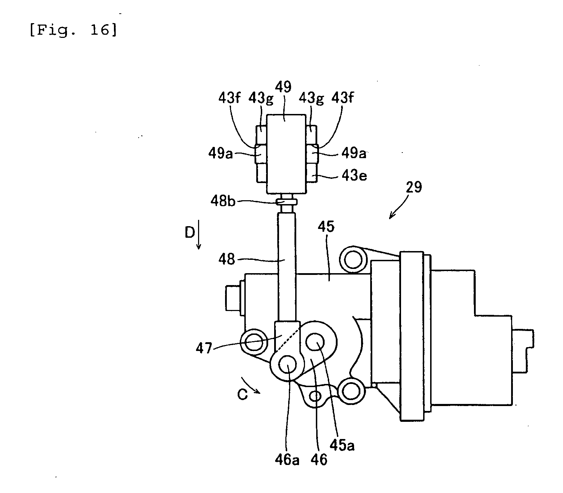

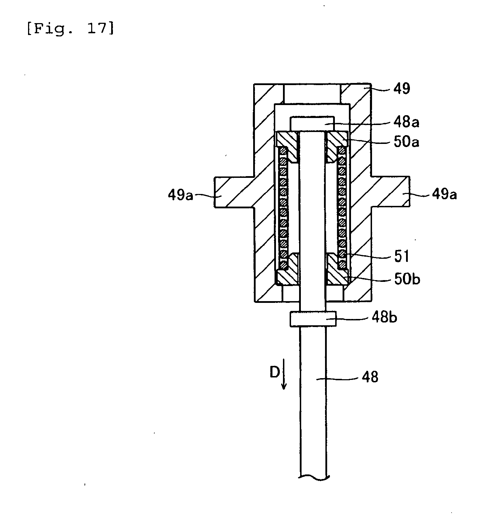

Moreover, as can be seen in Fig. 8 and Fig. 11, a generally spherical support member 46a is provided on the other end section of the turning lever 46. A connecting member 47 is attached to the spherical support member 46a of the turning lever 46 such that the connecting member 47 is capable of rocking with respect to the support member 46a. Further, a moving shaft 48 is attached to the connecting member 47. As can be seen in Fig. 17, an upper side pressing member 48a and a lower side pressing member 48b are provided on the moving shaft 48. The upper side pressing member 48a is positioned at the end section of the moving shaft 48 at the opposite side from the connecting member 47 (refer to Fig. 16). Further, the lower side pressing member 48b is positioned in a region that is a predetermined distance of separation in the downward direction from the upper side pressing member 48a of the moving shaft 48.

In addition, a moving member 49 is positioned at the side of the one end section of the moving shaft 48 where the upper side pressing member 48a (the lower side pressing member 48b) is provided. Both side surfaces of this moving member 49, as can be seen in Fig. 16, are provided with protrusions 49a that engage with the pair of notches 43f formed in the upper side link lever 43. Further, the retaining tabs 43g of the upper side link lever 43 are positioned so as to sandwich the moving member 49, and the notches 43f are engaged with the protrusions 49a. As a result, the upper side link lever 43 (the support section 43e) is supported by the moving member 49. Moreover, as shown in Fig. 17, bushes 50a and 50b for slidably supporting the moving shaft 48 are provided inside the moving member 49. The bushes 50a and 50b are disposed between the upper side pressing member 48a and the lower side pressing member 48b. Further, a compression spring 51 is attached between the bush 50a and the bush 50b inside the moving member 49.

Further, when the turning lever 46 is turned in direction C by the driving force of the motor 45 (the state shown in Fig. 16), as shown in Fig. 17, the compression spring 51 generates energizing force in direction D as a result of movement of the moving shaft 48 in direction D. As a result, the moving member 49 is energized in direction D by the compression spring 51. Accordingly, as can be seen in Fig. 8, the energizing force of the compression spring 51 (refer to Fig. 17), is transmitted to the parallel link 42 via the moving member 49, whereby the parallel link 42 is turned in direction A. Further, when the stopper 43c of the parallel link 42 abuts with the strut 27d as well, the energizing force of the compression spring 51 (refer to Fig. 17) is transmitted via the moving member 49 to the parallel link 42 such that the parallel link 42 turns in direction A.

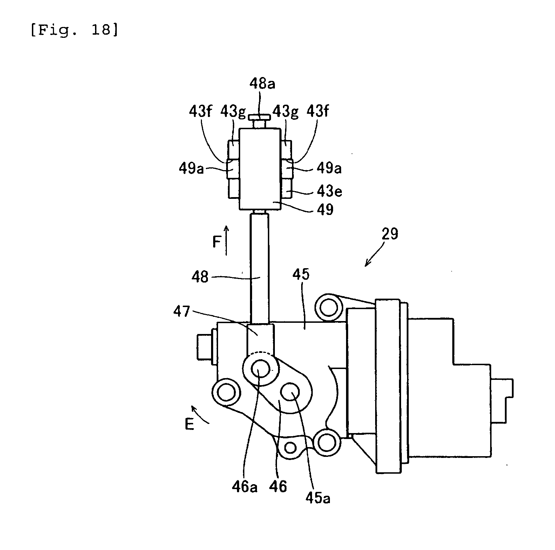

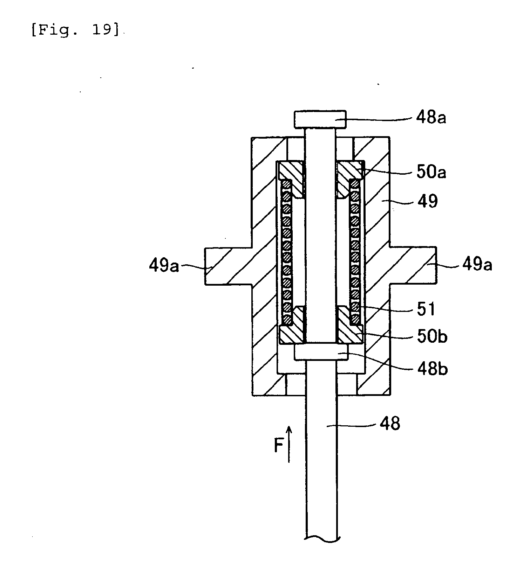

On the other hand, when the turning lever 46 is turned in direction E by the driving force of the motor 45 (the state shown in Fig. 18), the compression spring 51 generates energizing force in direction F as a result of movement of the moving shaft 48 in direction F, as shown in Fig. 19. As a result, the moving member 49 is energized in direction F by the compression spring 51. Accordingly, as can be seen in Fig. 10, the energizing force of the compression spring 51 (refer to Fig. 19), is transmitted to the parallel link 42 via the moving member 49, whereby the parallel link 42 is turned in direction B. Further, when the stopper 43d of the parallel link 42 abuts with the strut 27d as well, the energizing force of the compression spring 51 (refer to Fig. 19) is transmitted via the moving member 49 to the parallel link 42 such that the parallel link 42 turns in direction B.

Next, an operation that is performed when the length of the intake pipe that connects between the cleaner box 25 and the cylinder 16 is changed will be explained with reference to Fig. 4, Fig. 8, Fig. 10, and Fig. 16 to Fig. 19.

When the engine 14 shown in Fig. 4 is rotating at high speed, the intake pipe is made shorter to more easily obtain a pulsation effect. In other words, when the engine 14 is rotating at high speed, the moveable funnel 28 is moved to the separation position.

More particularly, first, as shown in Fig. 16, the turning lever 46 is turned in direction C by the motor 45 of the funnel moving mechanism 29. Accordingly, the moving shaft 48 is moved in direction D. As a result, as shown in Fig. 7, the compression spring 51 (refer to Fig. 17) generates energizing force in direction D, whereby the moving member 49 is moved in direction D. Thus, the parallel link 42 is turned in direction A. Following this, the parallel link 42 continues turning in direction A until the stopper 43c of the upper side link lever 43 abuts with the strut 27d.

As a result, the moveable funnel 28 is moved to the separation position at which the opening surface of the opening 28a of the moveable funnel 28 is held parallel with respect to the opening surface of the opening 27a of the fixed funnel 27. Accordingly, when the engine 14 (refer to Fig. 4) is rotating at high speed, the fixed funnel 27, the throttle body 18 (refer to Fig. 4), and the intake port 17a (refer to Fig. 4) structure the intake pipe. As a result the intake pipe is shortened. Note that, when the engine 14 shown in Fig. 4 is rotating at high speed and the intake pipe is shortened, high pressure-pressure waves can more easily reach the opening at the cylinder 16 side of the intake port 17a when the intake valve 19a is open, whereby intake efficiency is improved.

Note that, as shown in Fig. 8, when the moveable funnel 28 reaches the separation position, the position of the opening surface of the moveable funnel 28 on the side of the opening 27a of the fixed funnel 27, when viewed from the opening direction of the fixed funnel 27, is the same as the position of the opening surface of the moveable funnel 28 on the side of the opening 27a of the fixed funnel 27 in the contacting position (the state of Fig. 10). Further, when the moveable funnel 28 reaches the separation position, the energizing force of the compression spring 51 (refer to Fig. 17) is transmitted to the parallel link 42 via the moving member 49 such that the parallel link 42 is turned in direction A.

Next, in order to make it easier to obtain a pulsation effect when the engine 14 shown in Fig. 4 is rotating at low speed, the intake pipe is lengthened. In other words, when the engine 14 is rotating at low speed, the moveable funnel 28 is moved to the contacting position.

More specifically, first, as shown in Fig. 18, the turning lever 46 is turned in direction E by the motor 45 of the funnel moving mechanism 29. Accordingly, the moving shaft 48 is moved in direction F. As a result, as shown in Fig. 10, the compression spring 51 (refer to Fig. 19) generates energizing force in direction F, whereby the moving member 49 is moved in direction F. Thus, the parallel link 42 is turned in direction B. Following this, the parallel link 42 continues turning in direction B until the stopper 43d of the upper side link lever 43 abuts with the strut 27d.

As a result, the moveable funnel 28 is moved to the contacting position at which the opening surface of the opening 28a of the moveable funnel 28 is held parallel with respect to the opening surface of the opening 27a of the fixed funnel 27. Accordingly, when the engine 14 (refer to Fig. 4) is rotating at low speed, the moveable funnel 28, the fixed funnel 27, the throttle body 18 (refer to Fig. 4), and the intake port 17a (refer to Fig. 4) structure the intake pipe. As a result the intake pipe is lengthened. Note that, when the engine 14 shown in Fig. 4 is rotating at low speed and the intake pipe is lengthened, high pressure-pressure waves can more easily reach the opening at the cylinder 16 side of the intake port 17a when the intake valve 19a is open, whereby intake efficiency is improved.

Note that, as shown in Fig. 10, when the moveable funnel 28 reaches the contacting position, the energizing force of the compression spring 51 (refer to Fig. 19) is transmitted to the parallel link 42 via the moving member 49 such that the parallel link 42 is turned in direction B.

In this embodiment, as described above, the protrusions 25b are provided at the section of the cleaner box 25, which accommodates the moveable funnels 28 and the fixed funnels 27, that covers the moveable funnels 28. The protrusions 25b are provided to prevent contact occurring with the moveable funnels 28. As a result of this structure, as compared to when the entire rear section of the cleaner box 25 is made larger to prevent contact occurring with the moveable funnels 28, the volume of the rear section of the cleaner box 25 can be made smaller. Accordingly, it is possible to inhibit size increase of the cleaner box 25.

Further, in this embodiment, the recess 12a is provided in the section of the fuel tank 12 corresponding to the protrusions 25b of the cleaner box 25, and the fuel tank 12 is disposed so as to cover the section corresponding to the section where the moveable funnels 28 of the cleaner box 25 are disposed and is disposed to the rear side in the running direction (the direction of the arrow FWD) of the motorcycle. As a result of providing the recess 12a, as compared to when no recess 12a is provided in the fuel tank 12 and the fuel tank 12 is disposed a length equivalent to the protrusion length of the protrusions 25b of the cleaner box 25 in the rearward direction, it is possible to reduce the size of the gap between the cleaner box 25 and the sections of the fuel tank 12 other than the section that corresponds to the protrusions 25b. In other words, in the case that the recess 12a is provided in the section of the fuel tank 12 that corresponds to the protrusions 25b of the cleaner box 25, it is possible to reduce the size of the gap between the cleaner box 25 and the sections of the fuel tank 12 other than the section that corresponds to the protrusions 25b, whereby to the extent that the gap is reduced in the size, the area can be used as space for disposing the fuel tank 12. As a result, it is possible to inhibit the volume of the fuel tank 12 from being reduced.

Moreover, in this embodiment, each parallel link 42 is used to move the moveable funnel 28. Accordingly, the opening 27a of the moveable funnel 28 on the fixed funnel 27 side can be separated away from and brought into contact with respect to the opening 27a of the fixed funnel 27 on the intake side, while the opening 28a of the moveable funnel 28 on the fixed funnel 27 side is held parallel with respect to the opening surface 28a of the fixed funnel 27 on the intake side. As a result, even if the opening 28a of the moveable funnel 28 on the fixed funnel 27 side is separated away from the opening 27a of the fixed funnel 27 on the intake side, air that enters through the fixed funnel 27 having passed through the moveable funnel 28 is able to flow linearly. Accordingly, it is possible to inhibit flow resistance of the air from increasing. As a result, when the moveable funnel 28 is separated away from the fixed funnel 27, reduction of intake efficiency can be inhibited from occurring.

Further, in this embodiment, the turning amount of each parallel link 42 is adjusted such the position of the opening surface of the moveable funnel 28 on the side of the opening 27a of the fixed funnel 27 in the separation position, and the position of the opening surface of the moveable funnel 28 on the side of the opening 27a of the fixed funnel 27 in the contacting position are the same when viewed from the opening direction of the fixed funnel 27. As a result, when the moveable funnel 28 is moved from the contacting position to the separation position (in the case that the engine 14 is rotating at high speed), all of the air that enters through the fixed funnel 27 having passed through the moveable funnel 28 is able to flow in a substantially linear manner. Accordingly, it is possible to inhibit flow resistance of the air from increasing.

In addition, in this embodiment, four of the moveable funnels 28 supported by each parallel link 42 are positioned at positions that correspond with the arrangement positions of the intake ports 17a when the motorcycle is viewed from the top side thereof, and the protrusions 25b are formed at positions that correspond with the arrangement positions of the four moveable funnels 28. As a result, the recess 12a can be formed linearly in alignment with the protrusions 25b of the cleaner box 25 in the fuel tank 12, and be positioned at the section that corresponds with the protrusions 25b of the cleaner box 25. Thus, it is not necessary to make the shape of the recess 12a of the fuel tank 12, which is disposed at the section corresponding to the protrusions 25b of the cleaner box 25, complicated.

Further, in this embodiment, the resin cover 25a is provided so as to cover the front section of the fuel tank 12 and the front side in the running direction of the motorcycle (the direction of the FWD arrow) of the cleaner box 25 from the fuel tank 12. Accordingly, the cleaner box 25 and the front section of the fuel tank 12 can be easily protected.

Moreover, in this embodiment, the motor 45 that provides drive via the drive shaft 45a in order to move the moveable funnel 28 is disposed, with respect to the moveable funnel 28, at the opposite side to the fuel tank 12 that is disposed to the rear direction side in the running direction of the motorcycle (the direction of the FWD arrow) from the moveable funnel 28. As a result, as compared to when the motor 45 etc. for moving the moveable funnel 28 is disposed toward the fuel tank 12, the space on the fuel tank 12 side is increased, and this space can be used for disposing the fuel tank 12. As a result, the volume of the fuel tank 12 is inhibited from being reduced.

Note that, it is to be understood that all of the features of the embodiment disclosed here are merely examples, and in no way limit the present teaching.

For example, in the example of the above embodiment, the present teaching is applied to a motorcycle. However, the teaching is not limited to this structure, and may be applied to vehicles other than a motorcycle.

Furthermore, in the above embodiment, the present teaching is applied to a vehicle equipped with an in-line 4-cylinder engine. However, the present teaching is not limited to this structure, and may be applied to a vehicle equipped with a multi-cylinder engine that is different to an in-line 4-cyliner engine, or applied to a vehicle equipped with a single cylinder engine. Further, the present teaching may be applied to a multi-cylinder engine that has a cylinder arrangement that is not in-line (for example, an engine in which the cylinders are in a V-arrangement).

Moreover, in the above embodiment, pairs of the moveable funnels are integrated. However, the present teaching is not limited to this structure and three or more of the moveable funnels may be integrated. Further, a separate moveable funnel may be provided for each cylinder.

In addition, the above embodiment has a structure in which the moveable funnels are caused to rise and fall by the parallel links (the link mechanism) having the plurality of the link levers. However, the present teaching is not limited to this structure and a link mechanism having a single arm (lever) may be used to make the moveable funnels rise and fall.

Further, the above embodiment describes an example in which two protrusions are formed separately. However, the present teaching is not limited to this structure, and two or more of the protrusions need not be formed. Instead, the protrusions may be integrated and a single protrusion provided. Alternatively, four protrusions may be provided for each of the cylinders.

The description above discloses (amongst others) a first embodiment of a vehicle, which includes: an engine having an intake port; a fixed funnel that introduces air to the intake port of the engine; a moveable funnel that is moveably disposed on the intake side of the fixed funnel and that introduces air to the intake port of the engine along with the fixed funnel; a link mechanism that moveably supports the moveable funnel; and a case, in which the fixed funnel and the moveable funnel are disposed, that is provided with a protrusion at a section that covers the moveable funnel, the protrusion preventing the occurrence of contact between the case and the moveable funnel.

As described above, in the vehicle according to the first embodiment, the protrusion is provided in the section of the case accommodating the fixed funnel and the moveable funnel that covers the moveable funnel. The protrusion prevents the occurrence of contact between the case and the moveable funnel. As a result of providing this protrusion, it is possible to reduce the volume of the rear section of the case as compared to when the entire rear section of the case is made larger in order to prevent contact with the moveable funnel, and thereby inhibit size increase of the case.

The vehicle according to the first embodiment described-above preferably includes a fuel tank that is positioned so as to cover a section of the case that corresponds with the section where the moveable funnel is provided, and that is disposed to the rear of the case when the vehicle is viewed from the side. In addition, a recess is preferably provided in the section of the fuel tank that corresponds with the protrusion of the case. As a result of adopting this structure, as compared to when the recess is not provided in the fuel tank, and the fuel tank is disposed to the rear a distance equivalent to the length of the protrusion of the case, it is possible to reduce the size of the gap between the case and the sections of the fuel tank other than the section that corresponds to the protrusion. More specifically, when the recess is provided in the section of the fuel tank that corresponds to the protrusion of the case, it is possible to reduce the size of the gap between the case and the sections of the fuel tank other than the section that corresponds to the protrusion. Accordingly, to the extent that the gap is made smaller, the area can be used as space for disposing the fuel tank. As a result, it is possible to inhibit the volume of the fuel tank from being reduced.

In the above-described vehicle in which the recess is provided in the section of the fuel tank that corresponds to the protrusion of the case, it is preferable that a gap between the fuel tank and the case is formed to have a constant size. As a result of adopting this structure, the entire gap between the fuel tank and the case can be set to have a constant size that is the smallest necessary. Accordingly, the volume of the fuel tank can be increased still further.

In the above-described vehicle according to the first embodiment, it is preferable that the link mechanism includes a parallel link that has a plurality of link levers that moveably support the moveable funnel such that it is capable of parallel movement. If this structure is adopted, the parallel link is used to move the moveable funnel. As a result, the opening of the moveable funnel on the fixed funnel side can be separated away from and brought into contact with respect to the opening on the intake side of the fixed funnel, while the opening surface of the moveable funnel on the fixed funnel side is held parallel with respect to the opening surface of the fixed funnel on the intake side. As a result, even if the opening of the moveable funnel on the fixed funnel side is separated away from the opening of the fixed funnel on the intake side, air that enters through the fixed funnel having passed through the moveable funnel is able to flow linearly. Accordingly, it is possible to inhibit flow resistance of the air from increasing. As a result, when the moveable funnel is separated away from the fixed funnel, reduction of intake efficiency can be inhibited from occurring.

In the vehicle described-above including the parallel link having the plurality of link levers that moveably support the moveable funnel such that it is capable of parallel movement, it is preferable that: in the case that the engine is rotating at high speed, the link levers turn in a first direction to move the opening of the moveable funnel on the fixed funnel side to a first position at which the opening is away from the opening on the intake side of the fixed funnel; and in the case that the engine is rotating at low speed, the link levers turn in a second direction that is opposite to the first direction to move the opening of the moveable funnel on the fixed funnel side to a second position at which the opening is in contact with the opening on the intake side of the fixed funnel. If this structure is adopted, when the rotation speed of the engine changes from low to high, the moveable funnel can be moved from the second position to the first position while the opening surface of the moveable funnel on the fixed funnel side is held parallel with the opening surface on the intake side of the fixed funnel. As a result, when the engine is rotating at high speed, air that enters through the fixed funnel having passed through the moveable funnel is able to flow linearly. Accordingly, it is possible to inhibit flow resistance of the air from increasing. As a result, when the engine is rotating at high speed, reduction of intake efficiency can be inhibited from occurring.

In the above structure, it is preferable that a turning amount of the link lever is adjusted such that the position of the opening surface of the moveable funnel on the intake side of the fixed funnel in the first position is the same as the position of the opening surface of moveable funnel on the intake side of the fixed funnel in the second position when viewed from an opening direction of the fixed funnel. If this structure is adopted, when the moveable funnel is moved from the second position to the first position (when the engine is rotating at high speed), all of the air that enters through the fixed funnel having passed through the moveable funnel is able to flow in a substantially linear manner. Accordingly, it is possible to inhibit flow resistance of the air from increasing.

In the vehicle according to the above-described first embodiment, it is preferable that the engine has a plurality of intake ports, that there are a plurality of moveable funnels, with each moveable funnel corresponding to one of the intake ports, and that the protrusion provided in the case is located at a position that corresponds with the positions at which the moveable funnels are provided. As a result of adopting this structure, the protrusion that prevents contact occurring with the moveable funnel can be easily provided in accordance with the positioning arrangement of the moveable funnels.

In the vehicle including the parallel links described-above, it is preferable that the engine has a plurality of intake ports that are arranged linearly, that the moveable funnel, which is supported by the parallel link, is provided in a plurality, with each moveable funnel being located at a position that corresponds with the arrangement position of a respective one of the intake ports when the vehicle is viewed from above, and that the protrusion is formed at a position that corresponds with the positions at which the moveable funnels are provided. If this structure is adopted, the member positioned at the section that corresponds with the protrusions of the case can be formed linearly in alignment with the protrusions of the case. Thus, it is not necessary to make the shape of the member like the fuel tank, which is disposed at the section corresponding to the protrusion of the case, complicated.

In the vehicle described-above in which the engine has the plurality of intake ports, it is preferable that the plurality of intake ports of the engine is arranged in a vehicle width direction. If this structure is adopted, it is possible to easily inhibit the engine from becoming longer in the direction that intersects with the vehicle width direction.

It is preferable that the vehicle described-above provided with the recess in the section of the fuel tank that corresponds with the protrusion of the case further includes a resin cover that is disposed so as to cover a section of the fuel tank and a section of the case. If this structure is adopted, the sections of the case and the fuel tank can be easily protected.

In the vehicle described-above provided with the resin cover, it is preferable that the resin cover is disposed so as to cover the gap formed between the fuel tank and the case. If this structure is adopted, the resin cover can be used to simply inhibit entry of dirt or the like into the gap between the fuel tank and the case.

In the vehicle described-above provided with the resin cover, it is preferable that the resin cover is disposed so as to be smoothly contiguous with a surface of a section of the fuel tank that is not covered by the resin cover. If this structure is adopted, when the vehicle is running, air that flows from the front can smoothly pass to the rear, thereby reducing air resistance when the vehicle is running.

It is preferable that the vehicle described-above provided with the recess in the section of the fuel tank that corresponds with the protrusion of the case further includes a drive source that drives the link mechanism in order to move the moveable funnel. The drive source is disposed, if the moveable funnel is taken as a reference point, to the opposite side from the side where the fuel tank is disposed. If this structure is adopted, as compared to when the drive source for moving the moveable funnel is disposed in the fuel tank, the space of the fuel tank side is increased, and this space can be used for disposing the fuel tank. As a result, the volume of the fuel tank is inhibited from being reduced.

The description above still further discloses, in order to provide a vehicle that can inhibit size increase of a case of an intake device, an embodiment of a motorcycle (vehicle) which includes an engine 14 having an intake port 17a; a fixed funnel 27 that introduces air to the intake port 17a of the engine 14; a moveable funnel 28 that is moveably disposed on the intake side of the fixed funnel 27 and that introduces air to the intake port 17a of the engine 14 along with the fixed funnel 27; a parallel link 42 that moveable supports the moveable funnel 28; and a cleaner box 25, in which the fixed funnel 27 and the moveable funnel 28 are disposed, that is provided with a protrusion 25b at a section that covers the moveable funnel 28 and that prevents the occurrence of contact with the moveable funnel 28.

The description still further discloses, according to a first preferred aspect, a vehicle comprising: an engine having an intake port; a fixed funnel that introduces air to the intake port of the engine; a moveable funnel that is moveably disposed on the intake side of the fixed funnel and that introduces air to the intake port of the engine along with the fixed funnel; a link mechanism that moveably supports the moveable funnel; and a case, in which the fixed funnel and the moveable funnel are disposed, that is provided with a protrusion at a section that covers the moveable funnel, the protrusion preventing the occurrence of contact between the case and the moveable funnel.

Further, according to a second preferred aspect, the vehicle may further comprise: a fuel tank that is positioned so as to cover a section of the case that corresponds with the section where the moveable funnel is provided, and that is disposed to the rear of the case when the vehicle is viewed from the side, wherein a recess is provided in the section of the fuel tank that corresponds with the protrusion of the case.

Further, according to a third preferred aspect, a gap between the fuel tank and the case is formed to have a constant size.

Further, according to a fourth preferred aspect, the link mechanism comprises a parallel link that has a plurality of link levers that moveably support the moveable funnel such that it is capable of parallel movement.

Further, according to a fifth preferred aspect, in the case that the engine is rotating at high speed, the link levers turn in a first direction to move an opening of the moveable funnel on the fixed funnel side to a first position at which the opening is away from an opening on the intake side of the fixed funnel, and in the case that the engine is rotating at low speed, the link levers turn in a second direction that is opposite to the first direction to move the opening of the moveable funnel on the fixed funnel side to a second position at which the opening is in contact with the opening on the intake side of the fixed funnel.

Further, according to a sixth preferred aspect, a turning amount of the link levers is adjusted such that the position of an opening surface of the moveable funnel on the intake side of the fixed funnel in the first position is the same as the position of the opening surface of moveable funnel on the intake side of the fixed funnel in the second position when viewed from an opening direction of the fixed funnel.

Further, according to a seventh preferred aspect, the engine of the vehicle may have a plurality of the intake port, wherein the moveable funnel is provided in a plurality, with each moveable funnel corresponding to one of the intake ports, and the protrusion provided in the case is located at a position that corresponds with the positions where the moveable funnels are provided.

Further, according to an eighth preferred aspect, the engine of the vehicle may have a plurality of the intake port, wherein the intake ports being arranged linearly, the moveable funnel, which is supported by the parallel link, is provided in a plurality, each moveable funnel being located at a position that corresponds with the arrangement position of a respective one of the intake ports when the vehicle is viewed from above, and the protrusion is formed at a position that corresponds with the positions at which the moveable funnels are provided.

Further, according to a ninth preferred aspect, the plurality of intake ports of the engine are arranged in a vehicle width direction.

Further, according to a tenth preferred aspect, the vehicle may further comprise: a resin cover that is disposed so as to cover a section of the fuel tank and a section of the case.

Further, according to an eleventh preferred aspect, the resin cover is disposed so as to cover the gap formed between the fuel tank and the cover.

Further, according to a twelfth preferred aspect, the resin cover is disposed so as to be smoothly contiguous with a surface of a section of the fuel tank that is not covered by the resin cover.

Further, according to a thirteenth preferred aspect, the vehicle may further comprise: a drive source that drives the link mechanism in order to move the moveable funnel, the drive source being disposed, if the moveable funnel is taken as a reference point, to the opposite side from the side where the fuel tank is disposed.

## Claims

1. Vehicle comprising:
an engine (14) having an intake port (17a,17b);
a fixed funnel (27) that introduces air to the intake port (17a,17b) of the engine (14);
a moveable funnel (28) that is moveably supported by a funnel moving mechanism (29) on the intake side of the fixed funnel (27) and that introduces air to the intake port (17a,17b) of the engine (14) along with the fixed funnel (27); and
a case (25), in which the fixed funnel (27) and the moveable funnel (28) are disposed, **characterized in that**
said case (25) is provided with a protrusion (25b) at a section that covers the moveable funnel (28), the protrusion (25b) preventing the occurrence of contact between the case (25) and the moveable funnel (28).

2. Vehicle according to claim 1, wherein the funnel moving mechanism (29) comprises a link mechanism (42) that movably supports the movable funnel (28).

3. Vehicle according to claim 1 or 2, wherein the protrusion (25b) is provided at the rear section of the case (25) so as to protrude to the outside of the case (25) at a region that corresponds to a rear section of an upper edge section of the moveable funnel (28), such that the rear section of the upper edge section of the moveable funnel (28) does not come into contact with an inner surface of the case (25) when the moveable funnel (28) is raised.

4. Vehicle according to one of the claims 1 to 3, further comprising: a fuel tank (12) that is positioned so as to cover a section of the case (25) that corresponds with the section where the moveable funnel (28) is provided, and that is disposed to the rear of the case (25) when the vehicle is viewed from the side, wherein a recess (12a) is provided in the section of the fuel tank (12) that corresponds with the protrusion (25b) of the case (25).

5. Vehicle according to claim 4, wherein the fuel tank (12) is disposed to the rear a distance equivalent to the length of the protrusion (25b) of the case (25) to reduce the size of the gap between the case (25) and the fuel tank (12).

6. Vehicle according to claim 4 or 5, wherein the gap between the fuel tank (12) and the case (25) is formed to have a constant size.

7. Vehicle according to one of the claims 2 to 6, wherein the link mechanism functioning as the funnel moving mechanism comprises a parallel link (42) that has a plurality of link levers (43,44) that moveably support the moveable funnel (28) such that it is capable of parallel movement.

8. Vehicle according to claim 7, wherein in the case that the engine is rotating at high speed, the link levers (43,44) turn in a first direction to move an opening of the moveable funnel (28) on the fixed funnel side to a first position at which the opening is away from an opening on the intake side of the fixed funnel (27), and in the case that the engine is rotating at low speed, the link levers (43,44) turn in a second direction that is opposite to the first direction to move the opening of the moveable funnel (28) on the fixed funnel side to a second position at which the opening is in contact with the opening on the intake side of the fixed funnel (27).

9. Vehicle according to claim 8, wherein a turning amount of the link levers (43,44) is adjusted such that the position of an opening surface of the moveable funnel (28) on the intake side of the fixed funnel (27) in the first position is the same as the position of the opening surface of moveable funnel (28) on the intake side of the fixed funnel (27) in the second position when viewed from an opening direction of the fixed funnel (27).

10. Vehicle according to one of the claims 1 to 9, wherein the engine (14) has a plurality of the intake port, the moveable funnel (28) is provided in a plurality, with each moveable funnel (28) corresponding to one of the intake ports, and the protrusion (25b) provided in the case is located at a position that corresponds with the positions where the moveable funnels (28) are provided.

11. Vehicle according to one of the claims 7 to 10, wherein the engine (14) has a plurality of the intake port, the intake ports being arranged linearly, the moveable funnel (28), which is supported by the parallel link (42), is provided in a plurality, each moveable funnel (28) being located at a position that corresponds with the arrangement position of a respective one of the intake ports when the vehicle is viewed from above, and the protrusion (25b) is formed at a position that corresponds with the positions at which the moveable funnels (28) are provided.

12. Vehicle according to claim 11, wherein the plurality of intake ports of the engine are arranged in a vehicle width direction.

13. Vehicle according to one of the claims 4 to 12, further comprising a resin cover (25a) that is disposed so as to cover a section of the fuel tank (12) and a section of the case (25).

14. Vehicle according to claim 13, wherein the resin cover (25a) is disposed so as to cover the gap (60) formed between the fuel tank (12) and the cover (25).

15. Vehicle according to claim 13 or 14, wherein the resin cover (25a) is disposed so as to be smoothly contiguous with a surface of a section of the fuel tank (12) that is not covered by the resin cover.

16. Vehicle according to one of the claims 4 to 15, further comprising a drive source (45) that drives the link mechanism (42) in order to move the moveable funnel (28), the drive source (45) being disposed, if the moveable funnel (28) is taken as a reference point, to the opposite side from the side where the fuel tank (12) is disposed.

## Patentansprüche

1. Fahrzeug, das umfasst:
einen Motor (14) mit einem Einlasskanal (17a, 17b);
einen fest angebrachten Trichter (27), der Luft in den Einlasskanal (17a, 17b) des Motors (14) einleitet;
einen beweglichen Trichter (28), der mittels eines Trichter-Bewegungsmechanismus (29) beweglich an der Einlassseite des fest angebrachten Trichters (27) gelagert ist und der zusammen mit dem fest angebrachten Trichter (27) Luft in den Einlasskanal (17a, 17b) des Motors (14) einleitet; und
eine Verkleidung (25), in der der fest angebrachte Trichter (27) und der bewegliche Trichter (28) angeordnet sind, **dadurch gekennzeichnet, dass**
die Verkleidung (25) mit einem Vorsprung (25b) an einem Abschnitt versehen ist, der den beweglichen Trichter (28) abdeckt, wobei der Vorsprung (25b) verhindert, dass es zu Kontakt zwischen der Verkleidung (25) und dem beweglichen Trichter (28) kommt.

2. Fahrzeug nach Anspruch 1, wobei der Trichter-Bewegungsmechanismus (29) einen Gelenkmechanismus (24) umfasst, der den beweglichen Trichter (28) beweglich trägt.

3. Fahrzeug nach Anspruch 1 oder 2, wobei der Vorsprung (25b) an dem hinteren Abschnitt der Verkleidung (25) so vorhanden ist, dass er in einem Bereich, der einem hinteren Abschnitt eines Oberkantenabschnitts des beweglichen Trichters (28) entspricht, so aus der Verkleidung (25) nach außen vorsteht, dass der hintere Abschnitt des Oberkantenabschnitts des beweglichen Trichters (28) nicht mit einer Innenfläche der Verkleidung (25) in Kontakt kommt, wenn der bewegliche Trichter (28) angehoben wird.

4. Fahrzeug nach einem der Ansprüche 1 bis 3, das des Weiteren einen Kraftstofftank (12) umfasst, der so angeordnet ist, dass er einen Abschnitt der Verkleidung (25) abdeckt, der dem Abschnitt entspricht, in dem der bewegliche Trichter (28) vorhanden ist, und der sich, von der Seite des Fahrzeugs aus gesehen, hinter der Verkleidung (25) befindet, wobei eine Vertiefung (12a) in dem Abschnitt des Kraftstofftanks (12) vorhanden ist, der dem Vorsprung (25b) der Verkleidung (25) entspricht.

5. Fahrzeug nach Anspruch 4, wobei der Kraftstofftank (12) in einer Entfernung hinten angeordnet ist, die äquivalent zur Länge des Vorsprungs (25b) der Verkleidung (25) ist, so dass die Größe des Zwischenraums zwischen der Verkleidung (25) und dem Kraftstofftank (12) verringert wird.

6. Fahrzeug nach Anspruch 4 oder 5, wobei der Zwischenraum zwischen dem Kraftstofftank (12) und der Verkleidung (25) so ausgebildet ist, dass er eine konstante Größe hat.

7. Fahrzeug nach einem der Ansprüche 2 bis 6, wobei der Gelenkmechanismus, der als der Trichter-Bewegungsmechanismus dient, ein Parallelgelenk (42) umfasst, das eine Vielzahl von Gelenkhebeln (43, 44) aufweist, die den beweglichen Trichter (28) beweglich so tragen, dass er Parallelbewegung durchführen kann.

8. Fahrzeug nach Anspruch 7, wobei, wenn sich der Motor mit hoher Geschwindigkeit dreht, sich die Gelenkhebel (43, 44) in einer ersten Richtung drehen, um eine Öffnung des beweglichen Trichters (28) an der Seite des fest angebrachten Trichters an eine erste Position zu bewegen, an der die Öffnung von einer Öffnung an der Einlassseite des fest angebrachten Trichters (24) entfernt ist, und, wenn sich der Motor mit niedriger Geschwindigkeit dreht, sich die Gelenkhebel (43, 44) in einer zweiten Richtung drehen, die entgegengesetzt zu der ersten Richtung ist, um die Öffnung des beweglichen Trichters (28) an der Seite des fest angebrachten Trichters an eine zweite Position zu bewegen, an der die Öffnung in Kontakt mit der Öffnung an der Einlassseite des fest angebrachten Trichters (27) ist.

9. Fahrzeug nach Anspruch 8, wobei ein Maß der Drehung der Gelenkhebel (43, 44) so reguliert wird, dass, aus einer Öffnungsrichtung des fest angebrachten Trichters (27) gesehen, die Position einer Öffnungsfläche des beweglichen Trichters (28) an der Einlassseite des fest angebrachten Trichters (27) in der ersten Position die gleiche ist wie die Position der Öffnungsfläche des beweglichen Trichters (28) an der Einlassseite des fest angebrachten Trichters (27) in der zweiten Position.

10. Fahrzeug nach einem der Ansprüche 1 bis 9, wobei der Motor (14) eine Vielzahl der Einlasskanäle aufweist, mehrere bewegliche Trichter (28) vorhanden sind, wobei jeder bewegliche Trichter (28) einem der Einlasskanäle entspricht und sich der in der Verkleidung vorhandene Vorsprung (25b) an einer Position befindet, die den Positionen entspricht, an denen die beweglichen Trichter (28) vorhanden sind.

11. Fahrzeug nach einem der Ansprüche 7 bis 10, wobei der Motor (14) eine Vielzahl der Einlasskanäle aufweist, die Einlasskanäle linear angeordnet sind, mehrere der beweglichen Trichter (28) vorhanden sind, die mittels des Parallelgelenks (42) gelagert sind, sich jeder bewegliche Trichter (28), von oberhalb des Fahrzeugs aus gesehen, an einer Position befindet, die der Anordnungsposition eines entsprechenden der Einlasskanäle entspricht, und der Vorsprung (25b) an einer Position ausgebildet ist, die den Positionen entspricht, an denen die beweglichen Trichter (28) vorhanden sind.

12. Fahrzeug nach Anspruch 11, wobei die Vielzahl von Einlasskanälen des Motors in einer Breitenrichtung des Fahrzeugs angeordnet sind.

13. Fahrzeug nach einem der Ansprüche 4 bis 12, die des Weiteren eine Kunststoffabdeckung (25a) umfasst, die so angeordnet ist, dass sie einen Abschnitt des Kraftstofftanks (12) und einen Abschnitt der Verkleidung (25) abdeckt.

14. Fahrzeug nach Anspruch 13, wobei die Kunststoffabdeckung (25a) so angeordnet ist, dass sie den zwischen dem Kraftstofftank (12) und der Verkleidung (25) ausgebildeten Zwischenraum abdeckt.

15. Fahrzeug nach Anspruch 13 oder 14, wobei die Kunststoffabdeckung (25a) so angeordnet ist, dass sie sich ohne Unterbrechung an eine Fläche eines Abschnitts des Kraftstofftanks (12) anschließt, der nicht durch die Kunststoffabdeckung abgedeckt wird.

16. Fahrzeug nach einem der Ansprüche 4 bis 15, das des Weiteren eine Antriebsquelle (45) umfasst, die den Gelenkmechanismus (42) antreibt, um den beweglichen Trichter (28) zu bewegen, wobei die Antriebsquelle (45), wenn der bewegliche Trichter (28) als ein Bezugspunkt dient, an der Seite angeordnet ist, die der Seite gegenüberliegt, an der der Kraftstofftank (12) angeordnet ist.

## Revendications

1. Véhicule comprenant :
un moteur (14) comportant un orifice d'admission (17a, 17b) ;
un entonnoir fixe (27) introduisant de l'air dans l'orifice d'admission (17a, 17b) du moteur (14) ;
un entonnoir mobile (28) soutenu de façon mobile par un mécanisme de déplacement d'entonnoir (29) du côté admission de l'entonnoir fixe (27) et introduisant de l'air dans l'orifice d'admission (17a, 17b) du moteur (14) avec l'entonnoir fixe (27) ; et
un boîtier (25), dans lequel sont disposés l'entonnoir fixe (27) et l'entonnoir mobile (28), **caractérisé en ce que**
ledit boîtier (25) est muni d'une protubérance (25b) sur une section qui recouvre l'entonnoir mobile (28), la protubérance (25b) empêchant la survenance d'un contact entre le boîtier (25) et l'entonnoir mobile (28).

2. Véhicule selon la revendication 1, dans lequel le mécanisme de déplacement d'entonnoir (29) comprend un mécanisme de liaison (42) qui soutient de façon mobile l'entonnoir mobile (28).

3. Véhicule selon la revendication 1 ou 2, dans lequel la protubérance (25b) est disposée dans la section arrière du boîtier (25) de façon à faire saillie vers l'extérieur du boîtier (25) dans une région qui correspond à la section arrière d'une section de bord supérieur de l'entonnoir mobile (28), de telle sorte que la section arrière de la section de bord supérieur de l'entonnoir mobile (28) ne vienne pas en contact avec la surface intérieure du boîtier (25) lorsque l'entonnoir mobile (28) est levé.

4. Véhicule selon l'une des revendications 1 à 3, comprenant en outre un réservoir de carburant (12) positionné de telle sorte à recouvrir une section du boîtier (25) qui correspond à la section où est disposé l'entonnoir mobile (28) et qui est disposé vers l'arrière du boîtier (25) lorsque le véhicule est vu de côté, dans lequel une cavité (12a) est prévue dans la section du réservoir de carburant (12) qui correspond à la protubérance (25b) du boîtier (25).

5. Véhicule selon la revendication 4, dans lequel le réservoir de carburant (12) est disposé vers l'arrière à une distance qui équivaut à la longueur de la protubérance (25b) du boîtier (25), diminuant les dimensions de l'espace compris entre le boîtier (25) et le réservoir de carburant (12).

6. Véhicule selon la revendication 4 ou 5, dans lequel l'espace compris entre le réservoir de carburant (12) et le boîtier (25) est formé de manière à avoir une taille constante.

7. Véhicule selon l'une des revendications 2 à 6, dans lequel le mécanisme de liaison fonctionnant en tant que mécanisme de déplacement d'entonnoir comprend une liaison parallèle (42) comportant une pluralité de leviers de liaison (43, 44) qui soutiennent de façon mobile l'entonnoir mobile (28) de telle sorte qu'il est capable d'un mouvement parallèle.

8. Véhicule selon la revendication 7, dans lequel, dans le cas où le moteur tourne à grande vitesse, les leviers de liaison (43, 44) tournent dans un premier sens pour déplacer une ouverture de l'entonnoir mobile (28) du côté de l'entonnoir fixe vers une première position dans laquelle l'ouverture est éloignée d'une ouverture côté admission de l'entonnoir fixe (27), et dans le cas où le moteur tourne à faible vitesse, les leviers de liaison (43, 44) tournent dans un second sens qui est opposé au premier sens, déplaçant l'ouverture de l'entonnoir mobile (28) du côté de l'entonnoir fixe vers une seconde position dans laquelle l'ouverture est en contact avec l'ouverture du côté admission de l'entonnoir fixe (27).

9. Véhicule selon la revendication 8, dans lequel l'importance de la rotation des leviers de liaison (43, 44) est réglée de telle sorte que la position de la surface d'ouverture de l'entonnoir mobile (28) du côté admission de l'entonnoir fixe (27) dans la première position soit la même que la position de la surface d'ouverture de l'entonnoir mobile (28) du côté admission de l'entonnoir fixe (27) dans la seconde position, vu depuis la direction d'ouverture de l'entonnoir fixe (27).

10. Véhicule selon l'une des revendications 1 à 9, dans lequel le moteur (14) comporte une pluralité d'orifices d'admission, l'entonnoir mobile (28) est prévu en une pluralité, chaque entonnoir mobile (28) correspondant à l'un des orifices d'admission, et la protubérance (25b) prévue dans le boîtier est située dans une position qui correspond aux positions où sont disposés les entonnoirs mobiles (28).

11. Véhicule selon l'une des revendications 7 à 10, dans lequel le moteur (14) comporte une pluralité d'orifices d'admission, les orifices d'admission étant agencés de façon linéaire, l'entonnoir mobile (28) qui est soutenu par la liaison parallèle (42), est prévu en une pluralité, chaque entonnoir mobile (28) étant situé dans une position qui correspond à la position d'agencement d'un orifice respectif des orifices d'admission lorsque le véhicule est vu de dessus, et la protubérance (25b) est formée dans une position qui correspond aux positions dans lesquelles sont prévus les entonnoirs mobiles (28).

12. Véhicule selon la revendication 11, dans lequel la pluralité d'orifices d'admission du moteur sont agencés dans le sens de la largeur du véhicule.

13. Véhicule selon l'une des revendications 4 à 12, comprenant en outre un couvercle en résine (25a) qui est disposé de manière à recouvrir une section du réservoir de carburant (12) et une section du boîtier (25).

14. Véhicule selon la revendication 13, dans lequel le couvercle en résine (25a) est disposé de telle sorte à recouvrir l'espace (60) formé entre le réservoir de carburant (12) et le couvercle (25).

15. Véhicule selon la revendication 13 ou 14, dans lequel le couvercle en résine (25a) est disposé de telle sorte à être contigu de façon régulière avec une surface d'une section du réservoir de carburant (12) qui n'est pas recouverte par le couvercle en résine.

16. Véhicule selon l'une des revendications 4 à 15, comprenant en outre une source d'entraînement (45) qui entraîne le mécanisme de liaison (42) afin de déplacer l'entonnoir mobile (28), la source d'entraînement (45) étant disposée, si l'entonnoir mobile (28) est considéré comme un point de référence, du côté opposé par rapport au côté où est disposé le réservoir de carburant (12).
